# EUROPÄISCHE PATENTANMELDUNG

(11) **EP 1 826 718 A1**
(43) Veröffentlichungstag der Anmeldung: **29.08.2007**
(21) Anmeldenummer: 06003484.0
(22) Anmeldetag: 21.02.2006
(51) Int. Cl.: G06Q 40/00

(54) **Computerimplementiertes System zur Bewirtschaftung eines Datenbanksystems mit strukturierten Datensätzen**

(71) Anmelder: UBS AG, 8001 Zürich (CH)
(72) Erfinder: Meier, Guido, 5507 Mellingen (CH); Thaler, Michael, CH-5610 Wohlen (CH)
(74) Vertreter: Schmidt, Steffen J.

(57) **Zusammenfassung**

In einem computerimplementierten System zur Bewirtschaftung eines Datenbanksystems mit strukturierten Datensätzen, werden zwei voneinander getrennte interne Datenbanken geführt, sind eine Schnittstelle für eine Eingabe zumindest von Teilen eines strukturierten Datensatzes in eine der Datenbanken vorgesehen, ist wenigstens eine Schnittstelle zur Kommunikation mit einem externen Datenbanksystem vorgesehen, um zwischen einer der internen Datenbanken und der externen Datenbank zu kommunizieren. Angestoßen durch ein Einpflegen eines neuen Datensatzes in die erste Datenbank erfolgt ein Einpflegen eines neuen korrespondierenden Datensatzes in die zweite Datenbank erst dann, wenn von der externen Datenbank eine Bestätigung über das erfolgreiche Einpflegen eines korrespondierenden neuen Datensatzes in die externe Datenbank erhalten wurde, und bei einer Abweichung zwischen dem neuen Datensatzes in der ersten Datenbank und einem mutmaßlich korrespondierenden neuen Datensatz von der externen Datenbank, dem mutmaßlich korrespondierenden neuen Datensatz von der externen Datenbank abhängig vom Maß der Abweichung eine Wahrscheinlichkeit zugewiesen wird, und aus weiteren Datensätzen von der externen Datenbank ein Datensatz extrahiert wird, der eine höhere Wahrscheinlichkeit hat, der korrekte korrespondierende neue Datensatz zu sein.

## Beschreibung

### Hintergrund der Erfindung

Viele Unternehmen basieren ihr Geschäft auch auf Datenbanken, die sie im Rahmen von Geschäftsvorfällen bewirtschaften und in denen eine große Zahl strukturierter Datensätze vorgehalten und ggf. zu pflegen sind. Dabei treten einerseits im Unternehmen erzeugte, in die Datenbank manuell einzugebende neue Datensätze oder deren Änderungen auf. Andererseits nimmt die im Rahmen von elektronischem Datenverkehr zwischen Unternehmen anfallende Datenmenge immer mehr zu. Gleiches gilt auch für Behörden. Jedenfalls ist im Zusammenhang mit der Erbringung von Dienstleistungen, Etablierung und Durchführung von Geschäftsbeziehungen, oder bei der Ausübung staatlicher Aufgaben eine strukturierte und systematische datentechnische Erzeugung, Bearbeitung, Verwaltung, und Darstellung der erbrachten Dienstleistungen, eingegangenen Geschäftsbeziehungen oder dergl. erforderlich.

### Der Erfindung zugrunde liegende Probleme

Es kann mit erheblichem Aufwand verbunden sein, wenn die Datenbank eines Unternehmens (zum Beispiel einer Bank) oder einer Behörde mit der Datenbank eines anderen Unternehmens / einer anderen Behörde exakt korrespondieren muss. Diese, vordergründig als Selbstverständlichkeit erscheinende Anforderung wird dann zur höchst anspruchsvollen Aufgabe, wenn (i) ein Unternehmen mit unterschiedlichen anderen Unternehmen im Datenaustausch betreffend eine Vielzahl von Transaktionen steht, wenn (ii) zusätzlich Datensätze von Transaktionen manuell in die Datenbank des Unternehmens eingepflegt werden, wenn (iii) Ländergrenzen beim Datenaustausch überschritten werden und dabei staatliche Kontrollmechanismen eingreifen können, oder wenn (iv) zu bestimmten Zeitpunkten (Stichtage für Dividenden- und Zinszahlungen oder für Kapitaltransaktionen, Aktienteilungen, Kapitalerhöhungen, oder dergl.) die Übereinstimmung hergestellt sein muss, und wenn (v) dabei ggf. auch Hintergründe und Einzelheiten der mit dem Datenanfall verbundenen Transaktionen nachvollziehbar sein müssen. Außerdem sind innerhalb der Sphäre einer Bank oftmals aufgrund von bankfachlichen und/oder gesetzlichen Vorgaben mehrere Datenbanken zu führen, die zu bestimmten Zeiten abzugleichen sind. Unter Transaktion ist hierin ein beliebiger Geschäftsvorfall zwischen zum Beispiel zwei oder mehreren Banken / Finanzinstitutionen und/oder deren Kunden verstanden.

### Aufgabe der Erfindung

Aufgabe der Erfindung ist es, einen Weg aufzuzeigen, wie Transaktionen sicher und korrekt abzuwickeln sind, und der im Kontext dieser Transaktionen in computerimplementierten Systemen zur Bewirtschaftung eines Datenbanksystems mit strukturierten Datensätzen auftretende Datenverkehr innerhalb einer Bank, der Datenverkehr der Bank mit anderen Banken, oder auch der Datenverkehr der Bank mit institutionellen oder privaten Kunden / Partnern im In- und Ausland, effizient zu gestalten ist.

### Erfindungsgemäße Lösung

Zur Lösung dieser Aufgabe werden erfindungsgemäß in einem computerimplementierten System zur Bewirtschaftung eines Datenbanksystems mit eine oder mehrere Transaktionen betreffenden strukturierten Datensätzen zwei voneinander getrennte interne Datenbanken geführt. Des Weiteren ist eine Schnittstelle für eine Eingabe zumindest von Teilen eines strukturierten Datensatzes der Transaktion in eine der Datenbanken vorgesehen, und ist wenigstens eine Schnittstelle zur Kommunikation mit einem externen Datenbanksystem vorgesehen, um zwischen einer der internen Datenbanken und der externen Datenbank zu kommunizieren. Ein Einpflegen eines neuen Datensatzes der Transaktion in die erste Datenbank stößt ein Einpflegen eines neuen korrespondierenden Datensatzes in die zweite Datenbank an. Allerdings erfolgt das Einpflegen des neuen korrespondierenden Datensatzes in die zweite Datenbank erst dann, wenn von der externen Datenbank eine Bestätigung über das erfolgreiche Ausführen der Transaktion erhalten wurde, und bei einer Abweichung zwischen dem neuen Datensatzes in der ersten Datenbank und einem mutmaßlich korrespondierenden neuen Datensatz von der externen Datenbank, dem mutmaßlich korrespondierenden neuen Datensatz von der externen Datenbank abhängig vom Maß der Abweichung eine Wahrscheinlichkeit zugewiesen wird, und aus weiteren Datensätzen von der externen Datenbank ein Datensatz extrahiert wird, der eine höhere Wahrscheinlichkeit hat, der korrekte korrespondierende neue Datensatz zu sein.

Mit anderen Worten stellt die Erfindung ein Konzept bereit, wie zur Vermeidung von unnötigem Datenverkehr zwischen einzelnen Datenbanken bzw. deren Betreibern (in einem Datennetzwerk, zum Beispiel SWIFT-Netz) vorzugehen ist, wenn zwischen Datensätzen innerhalb des Datenbanksystem der Bank und/oder zwischen Datensätzen des Datenbanksystem und einem externen Datenbanksystem auftretende Inkonsistenzen auftreten. (SWIFT ist die Abkürzung für Society for Worldwide Interbank Financial Telecommunication. Es handelt sich dabei um eine internationale Genossenschaft von Geldinstituten, die ein Telekommunikationsnetz (SWIFT-Netz) für den Nachrichtenaustausch zwischen diesen unterhält.) Im Übrigen wird durch die Erfindung der Aufwand manueller Nacharbeit bei Inkonsistenzen, aber auch der sonstige Datenverkehr im Zusammenhang mit derartigen Abklärungen reduziert.

Dabei wird davon ausgegangen, dass im Zusammenhang mit der Transaktion in der Sphäre der externen Datenbank ein Einpflegen eines korrespondierenden neuen Datensatzes in die externe Datenbank erfolgt.

Vorzugsweise dient das erfindungsgemäße System zur Abwicklung von Transaktionen von Wertschriften in / für eine(r) Bank dient, und wobei die erste Datenbank ein Konto eines Kunden oder Partners der Bank für Transaktionen ist, und/oder die zweite Datenbank ein Nostrokonto der Bank ist.

Der Begriff Wertschrift, wie er im Zusammenhang mit der vorliegenden Erfindung verwendet wird, bezieht sich auf eine Urkunde, die ein privates Recht auf etwas derart verbrieft, dass die Innehabung oder der Besitz der Urkunde zur Geltendmachung des Rechts erforderlich ist. Hierzu werden Inhaber- und Orderpapiere gezählt, Rektapapier ausgeschlossen. Allerdings ist eine sog. Hinterlegungsbescheinigung (der Bank, dass die Aktien bei ihr im Depot verwahrt werden), die zum Beispiel zur Ausübung des Rechts auf Teilnahme an der Hauptversammlung genügt, keine Wertschrift im Sinne der vorliegenden Erfindung. Im engeren Sinne sind Effekten Wertschriften, also etwa Aktien, Anteilscheine, Optionsscheine, Rentenpapiere oder Schuldverschreibungen, also Pfandbriefe, Inhaberschuldverschreibungen, Kassenobligationen, Wandelanleihen, Zertifikate u. a.). Weiterhin gelten auch Anteile an einem Wertschriftensammelbestand oder an einer Sammelschuldbuchforderung, sowie Rechte auf Lieferung oder Zuteilung von Wertpapieren als Wertschriften im Sinne der vorliegenden Erfindung. Analoges gilt für Derivate (Derivate sind Finanzinstrumente, die von am Kassamarkt gehandelten Anlageinstrumenten (zum Beispiel Aktien, Anleihen, Devisen) abgeleitet werden. Die Bewertung wird überwiegend durch Preis, Preisschwankungen und -erwartungen der zugrunde liegenden Ausgangsinstrumente bestimmt. Bekannte Derivate sind Futures, Optionen und Swaps) und strukturierte Finanzprodukte (strukturierte Finanzprodukte sind Finanzinstrumente, die als Kombination von Elementaranlagen der Kassa- und Terminmärkte (z.B. Aktien, Zinsprodukte, Derivate) aufgefasst werden können. Diese Zusammenführung mehrerer einzelner Komponenten ermöglicht das Eingehen einer Vielzahl von Rendite/Risikoprofilen.)

Wertschriften im engeren Sinn werden in den verschiedenen Märkten durch unterschiedliche, aber jeweils eindeutige Kennungen (zum Beispiel ISIN, WKN, CUSIP, etc.) identifiziert. Die zwölfstellige Zahlen-Buchstaben-Kombination ISIN (International Securities Identification Number) hat zum Beispiel folgenden Aufbau:

| Ländercode | Nationale Kennnummer | Prüfziffer |
|---|---|---|
| DE | 000575200 | 0 |

in der die bisherige WertschriftenKennNummer WKN (hier: Bayer AG, WKN 575200) rechtsbündig eingearbeitet ist, wobei die vorderen Stellen mit Nullen aufgefüllt werden.

Ein Nostrokonto ist aus Sicht von Bank A ein Konto, das die Bank A bei einer Korrespondenzbank B unterhält. Aus Sicht von Bank B ist das Konto ein Vostrokonto. Transaktionen im Sinne dieser Erfindung sind Wertschriftenlieferungen aufgrund eines Auftrages oder ein Börsengeschäft zu verstehen. Die Lieferung kann in Verbindung mit einer Geldzahlung (Lieferung gegen Zahlung) oder als reine Transaktion (Lieferung ohne Zahlung) erfolgen. Ein Auftrag kann sich auf eine oder mehrere Positionen beziehen. Bezüglich der Verarbeitung und der Abwicklung stellt aber jede Position eine separate Transaktion dar.

Eine Lieferung ohne Zahlung hat folgende Schritte:
1a. Ein Kunde gibt der Bank X einen Wertschriftenauslieferungsauftrag über -y- Aktien ISIN vvvv
1b. Kunde sendet der Bank U eine Voravisierung (Eingang von Bank U -y- Aktien I-SIN vvvv)
2a. Bank X sendet an eine Wertschriften-Clearingstelle eine Lieferinstruktion (an Bank U -y- Aktien ISIN vvvv)
2b. Bank U sendet der Wertschriften-Clearingstelle eine Empfangsinstruktion (von Bank X -y- Aktien ISIN vvvv)
3a. Die Wertschriften-Clearingstelle sendet der Bank X eine Ausführungsbestätigung (Ausgang)
3b. Die Wertschriften-Clearingstelle sendet der Bank U eine Ausführungsbestätigung (Eingang)
4a. Die Bank X erstellt für den Kunden eine Lieferungsanzeige (Ausgang).
4b. Die Bank U erstellt für den Kunden eine Lieferungsanzeige (Eingang) und führt ihre zweite Datenbank nach.

Eine Lieferung gegen Zahlung "ZUG um ZUG" hat folgende Schritte:
1a. Kunde X gibt der Bank X einen Wertschriftenauslieferungsauftrag über -z- Aktien ISIN vvvv gegen Zahlung von CHF n,nnnn.---
1b. Kunde Y sendet der Bank U einen Wertschrifteneinlieferungsauftrag über -z- Aktien ISIN vvvv gegen Zahlung von CHF n,nnnn.--
2a. Bank X sendet der Wertschriften-Clearingstelle eine Lieferinstruktion (an Bank U - z- Aktien ISIN vvvv gegen Zahlung von CHF n,nnnn.--)
2b. Bank U sendet der Wertschriften-Clearingstelle eine Empfangsinstruktion (von Bank X -z- Aktien ISIN vvvv gegen Zahlung von CHF n,nnnn.--)
3a. Die Wertschriften-Clearingstelle sendet der Bank X eine Ausführungsbestätigung (Ausgang)
3b. Die Wertschriften-Clearingstelle sendet der Bank U eine Ausführungsbestätigung (Eingang)
4a. Bank X erstellt für den Kunden eine Lieferungsanzeige (Ausgang) und schreibt den Geldbetrag CHF n,nnnn.-- gut
4b. Bank U erstellt für den Kunden eine Lieferungsanzeige (Eingang) und belastet ihm den Geldbetrag CHF n,nnnn.-- und führt ihre zweite Datenbank nach.

Erfindungsgemäß kann das System zur Abwicklung von Transaktionen von Wertschriften in / für eine(r) Bank dienen, wobei die dritte, externe Datenbank ein Konto eines externen Verwahrers oder einer Clearingstelle von Wertschriften ist.

Eine Clearingstelle ist dabei eine Organisation, die sich bei der Transaktion zwischen Käufer und Verkäufer einschaltet und beiden Beteiligten die Erfüllung des Geschäfts garantiert. Ein Verwahrer ist verpflichtet, die Wertschriften unter äußerlich erkennbarer Bezeichnung jedes Hinterlegers gesondert von seinen eigenen Beständen und von denen Dritter aufzubewahren.

Vorzugsweise greift erfindungsgemäß das System zum Extrahieren von Datensätzen mit höherer Wahrscheinlichkeit auf Datenfelder des Datensatzes zu, aus denen sich der Transaktionstyp, die Buchungsrichtung, die Stückzahl, die Wertschriftenkennung, die Wertschriftenkenndaten, die Depotstelle, das Datum der Transaktion, oder das Wertstellungsdatum der Transaktion ergibt, zu der ein Einpflegen eines neuen korrespondierenden Datensatzes in die zweite Datenbank erfolgen soll.

Auf die Datenfelder des Datensatzes wird erfindungsgemäß gemäß einer dynamisch oder statisch festlegbaren Reihenfolge zugegriffen. Dabei kann erfindungsgemäß diese Festlegung der Reihenfolge auch in Abhängigkeit von den jeweils an der Transaktion beteiligten Entitäten (welche Banken, Clearingstellen, Verwahrer, etc.) oder den Transaktionen selbst verändert werden.

Das System gibt bei einer Abweichung zwischen dem neuen Datensatzes in der ersten Datenbank und einem mutmaßlich korrespondierenden neuen Datensatz in der externen Datenbank eine Fehlermeldung aus, wenn das System keinen Datensatz extrahiert oder extrahieren kann, der eine höhere Wahrscheinlichkeit hat, der korrekte korrespondierende neue Datensatz zu sein.

Erfindungsgemäß kann das System in diesem Fall an eine Kontrollinstanz der ersten, der zweiten und/oder der externen Datenbank eine Anfrage zur Auflösung der nicht herstellbaren Korrespondenz zwischen den Datensätzen senden.

Schließlich betrifft die Erfindung ein Verfahren, das in dem oben skizzierten System ausgeführt wird, und ein Computerprogrammprodukt, welches dazu ausgelegt ist, ein solches Verfahren zu implementieren, wenn es von einem Computer oder einem Computer-Netzwerk ausgeführt wird.

### Kurzbeschreibung der Zeichnungen

Nachfolgend wird die Erfindung anhand der beigefügten Zeichnung näher erläutert.

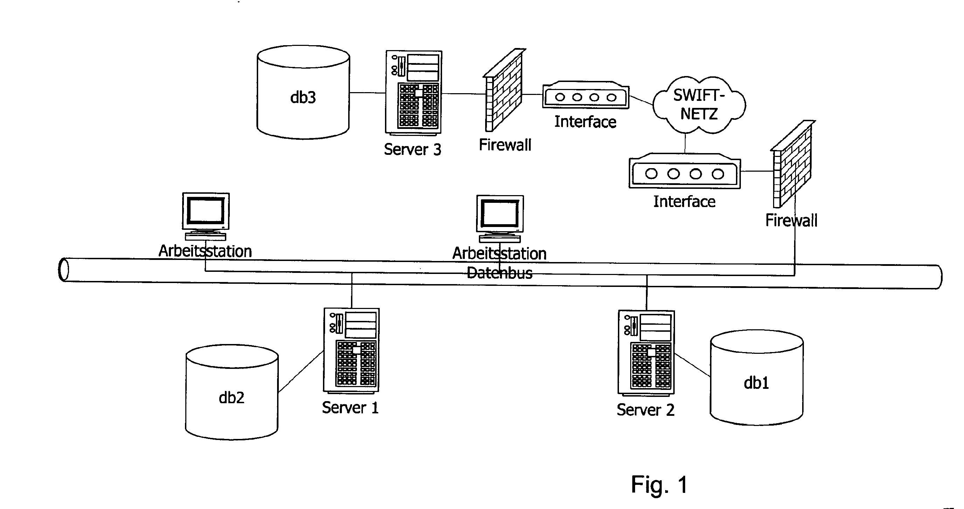

Fig. 1 veranschaulicht schematisch ein Computersystem zur Implementierung des erfindungsgemäßen Systems.

### Detaillierte Beschreibung von Ausführungsbeispielen

In Fig. 1 ist ein computerimplementiertes System zur Bewirtschaftung eines Datenbanksystems mit strukturierten Datensätzen veranschaulicht. Im vorliegenden Ausführungsbeispiel dient das System zur Abwicklung von Transaktionen von Wertschriften in einer Bank. Dieses System hat in einem nur schematisch als Bus angedeuteten Netzwerk einen oder mehrere Server (Server 1, Server 2) zur Datenbank- und/oder Programmhaltung, sowie eine Vielzahl von Arbeitsstationen. Ersichtlich werden in dem System bei den beiden Servern (Server 1, Server 2) zwei voneinander getrennte, in Bezug auf die Bank interne Datenbanken db1, db2 geführt, die mit strukturierten Datensätzen zu bewirtschaften sind. Die erste Datenbank db1 ist in diesem Fall eine Buchhaltung von Kundentransaktionen (also zum Beispiel ein bei der Bank geführtes Konto eines Kunden). Die zweite Datenbank db2 ist eine Nostrobuchhaltung der Bank.

Die Arbeitsstationen stellen erste, graphische und/oder alphanumerische Schnittstellen für eine manuelle Eingabe zumindest von Teilen eines strukturierten Datensatzes in eine der Datenbanken db1, db2 dar, über die ein Mitarbeiter der Bank Buchungsvorgänge abwickeln kann. Nicht weiter veranschaulicht, aber ebenfalls möglich und konzipiert ist die zunehmend verbreitete Eingabe von Transaktionen beim sog. online Bankgeschäft, bei dem nicht ein Bankmitarbeiter, sondern der Kunde selbst die Daten der Transaktion in das Computernetzwerk der Bank einspeist. Dazu ist wenigstens eine zweite, graphische und/oder alphanumerische Schnittstelle für eine Eingabe zumindest von Teilen eines strukturierten Datensatzes über ein Netzwerk in eine der Datenbanken db1, db2 vorgesehen.

Weiterhin ist eine dritte, bidirektionale Schnittstelle zur Kommunikation mit einem externen Datenbanksystem db3 über ein Datennetzwerk (SWIFT-Netz) oder eine Daten-Direktleitung vorgesehen. Diese Schnittstelle dient dazu, Teile eines strukturierten Datensatzes zwischen zumindest einer der internen Datenbanken db1, db2 und einer über einen externen Server (Server 3) mit externen Datenbank db3 zu kommunizieren. Da das System dieses Ausführungsbeispiels zur Abwicklung von Transaktionen von Wertschriften dient, stellt in diesem Ausführungsbeispiel die dritte, externe Datenbank db3 eine Buchhaltung eines externen Verwahrers von Wertschriften dar.

Wenn bei einer Wertschriftentransaktion ein Einpflegen eines neuen Datensatzes ds in die erste Datenbank db1 erfolgt, muss auch ein Einpflegen eines neuen korrespondierenden Datensatzes in die zweite Datenbank db2 erfolgen. Allerdings sieht hier die Erfindung vor, dass dies erst vorgenommen wird, wenn von der externen Datenbank db3 des Verwahrers oder der Wertschriften-Clearingstelle eine Bestätigung bei der Bank über die erfolgreiche Abwicklung der Transaktion in der Sphäre des Verwahrers (oder der Wertschriften-Clearingstelle) in dessen - aus Sicht der Bank - externe Datenbank db3 eingegangen ist.

In diesem Fall sieht die Erfindung vor, den zur Bestätigung vom Verwahrer oder von oder der Wertschriften-Clearingstelle gesendeten Datensatz in nachstehender Weise zu kontrollieren. Da üblicherweise zwischen der Bank und dem Verwahrer (oder der Wertschriften-Clearingstelle) eine Vielzahl von Datensätzen hin und her kommuniziert werden, ist die Zuordnung nicht unmittelbar möglich. Sofern eine Zuordnung zum Beispiel über eine Vorgangskennung erfolgen kann, wird auf Seiten der Bank verglichen, ob der neue Datensatz in der ersten Datenbank db1 und der mutmaßlich korrespondierende neue Datensatz von der externen Datenbank db3 tatsächlich korrespondieren. Im Fall einer Abweichung zwischen dem neuen Datensatz in der ersten Datenbank db1 und einem mutmaßlich korrespondierenden neuen Datensatz von der externen Datenbank db3 wird dem mutmaßlich korrespondierenden neuen Datensatz von der externen Datenbank db3 abhängig vom Maß der Abweichung eine Wahrscheinlichkeit zugewiesen der tatsächlich korrespondieren neue Datensatz zu sein. Dazu greift das System auf Datenfelder des von der externen Datenbank zugesendeten Datensatzes der Transaktion zu, aus denen sich
- der Transaktionstyp (zum Beispiel Lieferung gegen Zahlung, Lieferung ohne Zahlung, Dividendenzahlung, Kapitalerhöhung, Eintragung auf Nominee, etc.)
- die Buchungsrichtung (Eingang/Ausgang),
- die Stückzahl,
- die Wertschriftenkennung,
- die Wertschriftenkenndaten (z.B. Zinssatz, Laufzeit, Währung),
- die Depotstelle,
- das Datum der Transaktion, oder
- das Wertstellungsdatum der Transaktion
ergibt, zu der ein Einpflegen eines neuen korrespondierenden Datensatzes in die zweite Datenbank erfolgen soll und vergleicht sie mit dem entsprechenden Datenfeld des Datensatzes der Transaktion aus der ersten Datenbank db1, bevor ein Einpflegen des/der entsprechenden Datenfelder des Datensatzes der Transaktion in die zweite Datenbank db2 erfolgt. Abhängig von den Abweichungen wird die Wahrscheinlichkeit zugeordnet. Dies wird bei Vorliegen einer Abweichung für alle Datensätze durchgeführt, die von der externen Datenbank db3 zugestellt werden. Sofern aus weiteren Datensätzen von der externen Datenbank db3 ein Datensatz extrahiert wird, der eine höhere Wahrscheinlichkeit hat, der korrekte korrespondierende neue Datensatz zu dem in die zweite Datenbank db2 einzupflegenden Datensatz zu sein, wird dieser dem jeweiligen Datensatz zugeordnet und in die zweite Datenbank db2 eingepflegt. In diesem Fall wird er aus der Liste der von der externen Datenbank db3 zugestellten Datensätze entfernt.

Da die Fehlerverteilung in den einzelnen Datensätzen (zum Beispiel abhängig von dem externen Verwahrer oder dem Zeitpunkt der Datenübermittlung oder dem Übermittlungsweg) unterschiedlich sein kann, sieht die Erfindung vor, dass das System auf die Datenfelder der zu vergleichenden Datensätze gemäß einer dynamisch oder statisch festlegbaren Reihenfolge zugreift.

Bei einer Abweichung zwischen dem neuen Datensatz in der ersten Datenbank db1 und einem mutmaßlich korrespondierenden neuen Datensatz aus der externen Datenbank db3 gibt das System eine Fehlermeldung aus, sofern es keinen Datensatz extrahiert, der eine höhere Wahrscheinlichkeit hat, der korrekte korrespondierende neue Datensatz zu sein. Insbesondere, wenn die dem ursprünglichen mutmaßlichen Datensatz zugeordnete (Fehler-)Wahrscheinlichkeit eine vorbestimmbare Schwelle überschreitet, so dass davon auszugehen ist, dass hier ein nicht aufzulösender Fehler vorliegt, sendet das System an eine Kontrollinstanz der ersten, der zweiten und/oder der externen Datenbank eine Anfrage zur Auflösung der nicht herstellbaren Korrespondenz zwischen den Datensätzen.

## Patentansprüche

1. Computerimplementiertes System zur Bewirtschaftung eines Datenbanksystems mit strukturierten Datensätzen, wobei in diesem System
- wenigstens zwei voneinander getrennte interne Datenbanken (db1, db2) geführt werden, die mit eine oder mehrere Transaktionen betreffenden, strukturierten Datensätzen zu bewirtschaften sind,
- wenigstens eine erste, graphische und/oder alphanumerische Schnittstelle für eine manuelle Eingabe zumindest von Teilen eines strukturierten Datensatzes einer Transaktion in eine der Datenbanken vorgesehen ist, und/oder wenigstens eine zweite, graphische und/oder alphanumerische Schnittstelle für eine Eingabe zumindest von Teilen eines strukturierten Datensatzes einer Transaktion über ein Netzwerk in eine der Datenbanken (db1, db2) vorgesehen ist,
- wenigstens eine dritte, bidirektionale Schnittstelle zur Kommunikation mit einem externen Datenbanksystem (db3) über ein Datennetzwerk oder eine Daten-Direktleitung vorgesehen ist, um zumindest Teile eines strukturierten Datensatzes einer Transaktion zwischen zumindest einer der internen Datenbanken (db1, db2) und der externen Datenbank (db3) zu kommunizieren, wobei
- ein Einpflegen eines neuen Datensatzes einer Transaktion in die erste Datenbank (db1) ein Einpflegen eines neuen korrespondierenden Datensatzes der Transaktion in die zweite Datenbank (db2) anstößt, wobei
o (i) das Einpflegen des neuen korrespondierenden Datensatzes der Transaktion in die zweite Datenbank (db2) erst dann erfolgt, wenn von der externen Datenbank (db3) eine Bestätigung über das erfolgreiche Ausführen der Transaktion erhalten wurde, und
o (ii) bei einer Abweichung zwischen dem neuen Datensatzes in der ersten Datenbank (db1) und einem mutmaßlich korrespondierenden neuen Datensatz von der externen Datenbank (db3), dem mutmaßlich korrespondierenden neuen Datensatz von der externen Datenbank (db3) abhängig vom Maß der Abweichung eine Wahrscheinlichkeit zugewiesen wird, und
o (iii) aus weiteren Datensätzen von der externen Datenbank (db3) ein Datensatz extrahiert wird, der eine höhere Wahrscheinlichkeit hat, der korrekte korrespondierende neue Datensatz aus einer Vielzahl von Datensätzen aus der externen Datenbank (db3) zu dem in die zweite Datenbank (db2) einzupflegenden Datensatz zu sein.

2. Computerimplementiertes System nach Anspruch 1, bei dem das System zur Abwicklung von Transaktionen von Wertschriften in / für eine(r) Bank dient, und wobei die erste Datenbank (db1) eine Buchhaltung von Kundentransaktionen ist, und/oder die zweite Datenbank (db2) eine Nostrobuchhaltung der Bank ist.

3. Computerimplementiertes System nach Anspruch 1 oder 2, bei dem das System zur Abwicklung von Transaktionen von Wertschriften in / für eine(r) Bank dient, und wobei die dritte, externe Datenbank (db3) eine Buchhaltung eines externen Verwahrers von Wertschriften ist.

4. Computerimplementiertes System nach einem der vorhergehenden Ansprüche, bei dem das System zur Abwicklung von Transaktionen von Wertschriften zum Extrahieren von Datensätzen mit höherer Wahrscheinlichkeit auf Datenfelder des Datensatzes zugreift, aus denen sich der Transaktionstyp, die Buchungsrichtung, die Stückzahl, die Wertschriftenkennung, die Wertschriftenkenndaten, die Depotstelle, das Datum der Transaktion, oder das Wertstellungsdatum der Transaktion ergibt, zu der ein Einpflegen eines neuen korrespondierenden Datensatzes in die zweite Datenbank (db2) erfolgen soll.

5. Computerimplementiertes System nach dem vorhergehenden Anspruch, bei dem das System auf die Datenfelder des Datensatzes gemäß einer dynamisch oder statisch festlegbaren Reihenfolge zugreift.

6. Computerimplementiertes System nach einem der vorhergehenden Ansprüche, bei dem das System bei einer Abweichung zwischen dem neuen Datensatz in der ersten Datenbank (db1) und einem mutmaßlich korrespondierenden neuen Datensatz in der externen Datenbank (db3) eine Fehlermeldung ausgibt, wenn es keinen Datensatz extrahiert, der eine höhere Wahrscheinlichkeit hat, der korrekte korrespondierende neue Datensatz zu sein.

7. Computerimplementiertes System nach dem vorhergehenden Anspruch, bei dem das System an eine Kontrollinstanz der ersten, der zweiten und/oder der externen Datenbank eine Anfrage zur Auflösung der nicht herstellbaren Korrespondenz zwischen den Datensätzen sendet.

8. Computerimplementiertes Verfahren zur Bewirtschaftung eines Datenbanksystems mit strukturierten Datensätzen, mit den Schritten:
- Führen zweier voneinander getrennte interne Datenbanken (db1, db2), die mit eine oder mehrere Transaktionen betreffenden, strukturierten Datensätzen bewirtschaftet werden,
- Bereitstellen wenigstens einer ersten, graphischen und/oder alphanumerischen Schnittstelle für eine manuelle Eingabe zumindest von Teilen eines strukturierten Datensatzes der Transaktion in eine der Datenbanken (db1, db2), und/oder wenigstens einer zweiten, graphischen und/oder alphanumerischen Schnittstelle für eine Eingabe zumindest von Teilen eines strukturierten Datensatzes der Transaktion über ein Netzwerk in eine der Datenbanken (db1, db2),
- Bereitstellen wenigstens einer dritten, bidirektionalen Schnittstelle zur Kommunikation mit einem externen Datenbanksystem (db3) über ein Datennetzwerk oder eine Daten-Direktleitung, um zumindest Teile eines strukturierten Datensatzes der Transaktion zwischen zumindest einer der internen Datenbanken (db1, db2) und der externen Datenbank (db3) zu kommunizieren, wobei
- wobei
o (i) das Einpflegen des neuen korrespondierenden Datensatzes der Transaktion in die zweite Datenbank (db2) erst dann erfolgt, wenn von der externen Datenbank (db3) eine Bestätigung über das erfolgreiche Ausführen der Transaktion erhalten wurde, und
o (ii) bei einer Abweichung zwischen dem neuen Datensatzes in der ersten Datenbank (db1) und einem mutmaßlich korrespondierenden neuen Datensatz von der externen Datenbank (db3), dem mutmaßlich korrespondierenden neuen Datensatz von der externen Datenbank (db3) abhängig vom Maß der Abweichung eine Wahrscheinlichkeit zugewiesen wird, und
o (iii) aus weiteren Datensätzen von der externen Datenbank (db3) ein Datensatz extrahiert wird, der eine höhere Wahrscheinlichkeit hat, der korrekte korrespondierende neue Datensatz aus einer Vielzahl von Datensätzen aus der externen Datenbank (db3) zu dem in die zweite Datenbank (db2) einzupflegenden Datensatz zu sein.

9. Computerimplementiertes Verfahren nach Anspruch 8, bei dem das System zur Abwicklung von Transaktionen von Wertschriften in / für eine(r) Bank dient, und wobei die erste Datenbank (db1) eine Buchhaltung von Kundentransaktionen ist, und/oder die zweite Datenbank (db2) eine Nostrobuchhaltung der Bank ist.

10. Computerimplementiertes Verfahren nach Anspruch 8 oder 9, das zur Abwicklung von Transaktionen von Wertschriften in / für eine(r) Bank dient, und wobei die dritte, externe Datenbank (db3) eine Buchhaltung eines externen Verwahrers ist.

11. Computerimplementiertes Verfahren nach einem der vorhergehenden Ansprüche, mit dem Schritt, dass
zur Abwicklung von Transaktionen von Wertschriften zum Extrahieren von Datensätzen (ds j) mit höherer Wahrscheinlichkeit auf Datenfelder des Datensatzes zugreift, aus denen sich die Buchungsrichtung, die Stückzahl, die Wertschriftenkennung, die Wertschriftenkenndaten, die Depotstelle, das Datum der Transaktion, oder das Wertstellungsdatum der Transaktion ergibt, zu der ein Einpflegen eines neuen korrespondierenden Datensatzes in die zweite Datenbank (db2) erfolgen soll.

12. Computerimplementiertes Verfahren nach dem vorhergehenden Anspruch, mit dem Schritt, dass
auf die Datenfelder des Datensatzes gemäß einer dynamisch oder statisch festlegbaren Reihenfolge zugegriffen wird.

13. Computerimplementiertes Verfahren nach einem der vorhergehenden Ansprüche, mit dem Schritt, dass
bei einer Abweichung zwischen dem neuen Datensatz in der ersten Datenbank (db1) und einem mutmaßlich korrespondierenden neuen Datensatz in der externen Datenbank (db3) eine Fehlermeldung ausgegeben, wenn es keinen Datensatz extrahiert, der eine höhere Wahrscheinlichkeit hat, der korrekte korrespondierende neue Datensatz zu sein.

14. Computerimplementiertes Verfahren nach dem vorhergehenden Anspruch, mit dem Schritt, dass
eine Anfrage an eine Kontrollinstanz der ersten, der zweiten und/oder der externen Datenbank zur Auflösung der nicht herstellbaren Korrespondenz zwischen den Datensätzen gesendet wird.

15. Computerprogrammprodukt, welches dazu ausgelegt ist, das Verfahren nach einem der vorhergehenden Ansprüche auszuführen wenn es von einem Computer oder einem Computer-Netzwerk ausgeführt wird.

## Geänderte Patentansprüche

### Geänderte Patentansprüche gemäss Regel 86(2) EPÜ.

**1.** Computerimplementiertes System zur Bewirtschaftung eines Datenbanksystems mit strukturierten Datensätzen, wobei in diesem System
- wenigstens zwei voneinander getrennte interne Datenbanken (db1, db2) geführt werden, die mit eine oder mehrere Transaktionen betreffenden, strukturierten Datensätzen zu bewirtschaften sind,
- wenigstens eine erste, graphische und/oder alphanumerische Schnittstelle für eine manuelle Eingabe zumindest von Teilen eines strukturierten Datensatzes einer Transaktion in eine der Datenbanken vorgesehen ist, und/oder wenigstens eine zweite, graphische und/oder alphanumerische Schnittstelle für eine Eingabe zumindest von Teilen eines strukturierten Datensatzes einer Transaktion über ein Netzwerk in eine der Datenbanken (db1, db2) vorgesehen ist ,
- wenigstens eine dritte, bidirektionale Schnittstelle zur Kommunikation mit einem externen Datenbanksystem (db3) über ein Datennetzwerk oder eine Daten-Direktleitung vorgesehen ist, um zumindest Teile eines strukturierten Datensatzes einer Transaktion zwischen zumindest einer der internen Datenbanken (db1, db2) und der externen Datenbank (db3) zu kommunizieren, wobei
- ein Einpflegen eines neuen Datensatzes einer Transaktion in die erste Datenbank (db1) ein Einpflegen eines neuen korrespondierenden Datensatzes der Transaktion in die zweite Datenbank (db2) anstößt, wobei das Einpflegen des neuen korrespondierenden Datensatzes der Transaktion in die zweite Datenbank (db2) erst dann erfolgt, wenn von der externen Datenbank (db3) eine Bestätigung über das erfolgreiche Ausführen der Transaktion erhalten wurde, wobei
o eine die Transaktion betreffende Instruktion über die dritte Schnittstelle an das externe Datenbanksystem gesendet wird;
o eine Vielzahl von Datensätzen von dem externen Datenbanksystem empfangen werden, wobei jeder der Datensätze eine Bestätigung über das erfolgreiche Ausführen einer Instruktion ist;
o Mutmaßlich korrespondierende der empfangenen Datensätze mit dem neuen Datensatz in der ersten Datenbank verglichen werden, wobei
■ bei einer Abweichung zwischen dem neuen Datensatzes in der ersten Datenbank (db1) und einem mutmaßlich korrespondierenden neuen Datensatz von der externen Datenbank (db3), dem mutmaßlich korrespondierenden neuen Datensatz von der externen Datenbank (db3) abhängig vom Maß der Abweichung eine Wahrscheinlichkeit zugewiesen wird, und
■ aus weiteren Datensätzen von der externen Datenbank (db3) ein Datensatz extrahiert wird, der eine höhere Wahrscheinlichkeit hat, der korrekte korrespondierende neue Datensatz aus einer Vielzahl von Datensätzen aus der externen Datenbank (db3) zu dem in die zweite Datenbank (db2) einzupflegenden Datensatz zu sein.

**2.** Computerimplementiertes System nach Anspruch 1, bei dem das System zur Abwicklung von Transaktionen von Wertschriften in / für eine(r) Bank dient, und wobei die erste Datenbank (db1) eine Buchhaltung von Kundentransaktionen ist, und/oder die zweite Datenbank (db2) eine Nostrobuchhaltung der Bank ist.

**3.** Computerimplementiertes System nach Anspruch 1 oder 2, bei dem das System zur Abwicklung von Transaktionen von Wertschriften in / für eine(r) Bank dient, und wobei die dritte, externe Datenbank (db3) eine Buchhaltung eines externen Verwahrers von Wertschriften ist.

**4.** Computerimplementiertes System nach einem der vorhergehenden Ansprüche, bei dem das System zur Abwicklung von Transaktionen von Wertschriften zum Extrahieren von Datensätzen mit höherer Wahrscheinlichkeit auf Datenfelder des Datensatzes zugreift, aus denen sich der Transaktionstyp, die Buchungsrichtung, die Stückzahl, die Wertschriftenkennung, die Wertschriftenkenndaten, die Depotstelle, das Datum der Transaktion, oder das Wertstellungsdatum der Transaktion ergibt, zu der ein Einpflegen eines neuen korrespondierenden Datensatzes in die zweite Datenbank (db2) erfolgen soll.

**5.** Computerimplementiertes System nach dem vorhergehenden Anspruch, bei dem das System auf die Datenfelder des Datensatzes gemäß einer dynamisch oder statisch festlegbaren Reihenfolge zugreift.

**6.** Computerimplementiertes System nach einem der vorhergehenden Ansprüche, bei dem das System bei einer Abweichung zwischen dem neuen Datensatz in der ersten Datenbank (db1) und einem mutmaßlich korrespondierenden neuen Datensatz in der externen Datenbank (db3) eine Fehlermeldung ausgibt, wenn es keinen Datensatz extrahiert, der eine höhere Wahrscheinlichkeit hat, der korrekte korrespondierende neue Datensatz zu sein.

**7.** Computerimplementiertes System nach dem vorhergehenden Anspruch, bei dem das System an eine Kontrollinstanz der ersten, der zweiten und/oder der externen Datenbank eine Anfrage zur Auflösung der nicht herstellbaren Korrespondenz zwischen den Datensätzen sendet.

**8.** Computerimplementiertes Verfahren zur Bewirtschaftung eines Datenbanksystems mit strukturierten Datensätzen, mit den Schritten:
- Führen zweier voneinander getrennte interne Datenbanken (db1, db2), die mit eine oder mehrere Transaktionen betreffenden, strukturierten Datensätzen bewirtschaftet werden,
- Bereitstellen wenigstens einer ersten, graphischen und/oder alphanumerischen Schnittstelle für eine manuelle Eingabe zumindest von Teilen eines strukturierten Datensatzes der Transaktion in eine der Datenbanken (db1, db2), und/oder wenigstens einer zweiten, graphischen und/oder alphanumerischen Schnittstelle für eine Eingabe zumindest von Teilen eines strukturierten Datensatzes der Transaktion über ein Netzwerk in eine der Datenbanken (db1, db2),
- Bereitstellen wenigstens einer dritten, bidirektionalen Schnittstelle zur Kommunikation mit einem externen Datenbanksystem (db3) über ein Datennetzwerk oder eine Daten-Direktleitung, um zumindest Teile eines strukturierten Datensatzes der Transaktion zwischen zumindest einer der internen Datenbanken (db1, db2) und der externen Datenbank (db3) zu kommunizieren,
- Einpflegen eines neuen Datensatzes einer Transaktion in die erste Datenbank (db1);
- Einpflegen eines neuen korrespondierenden Datensatzes der Transaktion in die zweite Datenbank (db2), angestoßen durch das Einpflegen des neuen Datensatzes der Transaktion in die erste Datenbank, wobei das Einpflegen des neuen korrespondierenden Datensatzes der Transaktion in die zweite Datenbank (db2) erst dann erfolgt, wenn von der externen Datenbank (db3) eine Bestätigung über das erfolgreiche Ausführen der Transaktion erhalten wurde, mit den folgenden weiteren Schritten:
o Senden einer die Transaktion betreffende Instruktion über die dritte Schnittstelle an das externe Datenbanksystem;
o Empfangen einer Vielzahl von Datensätzen von dem externen Datenbanksystem, wobei jeder der Datensätze eine Bestätigung über das erfolgreiche Ausführen einer Instruktion ist;
o Vergleichen von mutmaßlich korrespondierenden der empfangenen Datensätze mit dem neuen Datensatz in der ersten Datenbank, wobei
■ bei einer Abweichung zwischen dem neuen Datensatzes in der ersten Datenbank (db1) und einem mutmaßlich korrespondierenden neuen Datensatz von der externen Datenbank (db3), dem mutmaßlich korrespondierenden neuen Datensatz von der externen Datenbank (db3) abhängig vom Maß der Abweichung eine Wahrscheinlichkeit zugewiesen wird, und
■ aus weiteren Datensätzen von der externen Datenbank (db3) ein Datensatz extrahiert wird, der eine höhere Wahrscheinlichkeit hat, der korrekte korrespondierende neue Datensatz aus einer Vielzahl von Datensätzen aus der externen Datenbank (db3) zu dem in die zweite Datenbank (db2) einzupflegenden Datensatz zu sein.

**9.** Computerimplementiertes Verfahren nach Anspruch 8, bei dem das System zur Abwicklung von Transaktionen von Wertschriften in / für eine(r) Bank dient, und wobei die erste Datenbank (db1) eine Buchhaltung von Kundentransaktionen ist, und/oder die zweite Datenbank (db2) eine Nostrobuchhaltung der Bank ist.

**10.** Computerimplementiertes Verfahren nach Anspruch 8 oder 9, das zur Abwicklung von Transaktionen von Wertschriften in / für eine(r) Bank dient, und wobei die dritte, externe Datenbank (db3) eine Buchhaltung eines externen Verwahrers ist.

**11.** Computerimplementiertes Verfahren nach einem der vorhergehenden Ansprüche, mit dem Schritt, dass
zur Abwicklung von Transaktionen von Wertschriften zum Extrahieren von Datensätzen (ds j) mit höherer Wahrscheinlichkeit auf Datenfelder des Datensatzes zugreift, aus denen sich die Buchungsrichtung, die Stückzahl, die Wertschriftenkennung, die Wertschriftenkenndaten, die Depotstelle, das Datum der Transaktion, oder das Wertstellungsdatum der Transaktion ergibt, zu der ein Einpflegen eines neuen korrespondierenden Datensatzes in die zweite Datenbank (db2) erfolgen soll.

**12.** Computerimplementiertes Verfahren nach dem vorhergehenden Anspruch, mit dem Schritt, dass
auf die Datenfelder des Datensatzes gemäß einer dynamisch oder statisch festlegbaren Reihenfolge zugegriffen wird.

**13.** Computerimplementiertes Verfahren nach einem der vorhergehenden Ansprüche, mit dem Schritt, dass
bei einer Abweichung zwischen dem neuen Datensatz in der ersten Datenbank (db1) und einem mutmaßlich korrespondierenden neuen Datensatz in der externen Datenbank (db3) eine Fehlermeldung ausgegeben, wenn es keinen Datensatz extrahiert, der eine höhere Wahrscheinlichkeit hat, der korrekte korrespondierende neue Datensatz zu sein.

**14.** Computerimplementiertes Verfahren nach dem vorhergehenden Anspruch, mit dem Schritt, dass
eine Anfrage an eine Kontrollinstanz der ersten, der zweiten und/oder der externen Datenbank zur Auflösung der nicht herstellbaren Korrespondenz zwischen den Datensätzen gesendet wird.

**15.** Computerprogrammprodukt, welches dazu ausgelegt ist, das Verfahren nach einem der vorhergehenden Ansprüche auszuführen wenn es von einem Computer oder einem Computer-Netzwerk ausgeführt wird.
